# EUROPEAN PATENT SPECIFICATION

(11) **EP 3 025 812 B1**
(45) Date of publication and mention of the grant of the patent: **31.07.2019**
(21) Application number: 14195481.8
(22) Date of filing: 28.11.2014
(51) Int. Cl.: B23C 3/34

(54) **Method for forming by metal cutting a circular groove**
Verfahren zum Formen mittels Metallschneiden einer kreisförmigen Rille
Méthode de formation par découpe de métal d'une rainure circulaire

(43) Date of publication of application: 01.06.2016
(73) Proprietor: Sandvik Intellectual Property AB, 811 81 Sandviken (SE)
(72) Inventor: Persson, Stefan, SE-816 95 Åmotsbruk (SE); Embretsen, Michael, SE-803 24 Gävle (SE)
(74) Representative: Sandvik

(56) References cited:
- EP-A1- 0 115 755
- WO-A1-2013/030351
- JP-A- 2003 145 333
- SU-A1- 1 199 481

## Description

### BACKGROUND OF THE INVENTION AND PRIOR ART

The present invention relates generally to a method to form a circular groove. More precisely, the present invention relates to a method according to the preamble of claim 1. In other words, the invention relates to a method for forming by metal cutting a circular groove in a metal work piece, comprising a front end and a rear end, wherein a rotatable tool is rotatable in a given direction of rotation around a tool center axis which is a longitudinal axis of the rotatable tool, the front end comprising two cutting edges located on opposite sides and at a distance from the tool center axis.

Such a tool is known from WO2013/030351A1. It also discloses a method to form a circular groove with such a tool, as per the preamble of independent claim 1.

When producing by metal cutting a circular groove in a work piece, several methods are known. One common type of circular groove is a seal ring groove. It is used in components in the oil industry. Common shapes of such seal ring grooves are defined by the American Petroleum Institute standard 6A. Such seal ring grooves have a bottom surface, an inner wall surface and an outer wall surface. The seal ring groove has an opening in a flat surface. The outer and inner walls are tapered in such a way that the bottom of the groove is narrower than the opening. The material of the components which comprise such seal ring groove can be different types of steel alloys.

Common ways to produce seal ring grooves is by machining, also called metal cutting. A work piece is clamped in a CNC (computer numerical control) machine, e.g. a machining center, which has a rotatable machine spindle, in which a rotatable tool is clamped. The tool is then rotated around the center axis thereof and is moved relative to the work piece. Movement is called feed. The rotatable tool comprises at least two cutting inserts, which are mounted in insert seats, usually by screws. During machining, material from the work piece is removed in the form of chips. Cutting edges of the inserts go into the work piece and cut the chips. The cutting inserts gets worn by cutting. For example, a common form of wear, or tool wear, is flank wear. When the cutting insert is worn, it can be replaced by a new one. Alternatively, it may have a non-used cutting edge or cutting edges, which can be used. For example, parallelogram-shaped cutting inserts usually have 2 or 4 equally shaped cutting portions, i.e. set of cutting edges. Therefor they may be used 2 or 4 times, before being replaced by a new cutting insert.

A method to produce by metal cutting a circular groove is disclosed in WO2013/030351 A1. A rotating tool comprising two opposite cutting inserts rotates around the center axis thereof. The tool center axis is located at a constant distance from and rotates around the groove center axis. Outer and inner cutting edges of both cutting inserts form the same angle relative to the tool center axis.

The inventor has found that it is desired that circular grooves, such as seal ring grooves, after one machining operation with one rotatable tool has a shape which is geometrically accurate and precise. The inventor has also found it desired to produce the seal ring groove as fast as possible with as low cost as possible, with as long tool-life as possible, where the tolerances of the tool has as little impact as possible on the dimensional accuracy of the finished circular groove after machining or cutting.

### SUMMARY OF THE INVENTION

The method, disclosed in WO2013/030351 A1 has the disadvantage that there is a risk that the geometrical accuracy of the walls of the circular groove after cutting is not sufficient. A further disadvantage is that the pressure or load on the insert will increase on the insert during cutting, because the chip thickness and hence the removed volume of material per time unit will increase during cutting. An object of the invention is to reduce at least one of the above disadvantages. This object is achieved by a method according to claim 1.

By gradually decreasing the distance X, i.e. the distance from the tool center axis to the groove center axis, during cutting, the chip thickness will be reduced, thereby improving the tool-life of the cutting edges. Also, the cutting edges will during cutting have a movement in the form similar to a helical cone, albeit not a perfect circular cone. In other words, a reference point of the rotatable tool located at the tool center axis will during cutting, when the tool is moving toward the bottom surface of the circular groove, move at an angle relative to the groove center axis. This angle is larger than zero. This angle is preferably equal to or smaller than the angle that the outer wall surface of the circular groove forms relative to the groove center axis. This angle is preferably equal to or up to 3 degrees less, or even more preferably 0,5 - 1,5 degree less, than the angle that the outer wall surface of the circular groove forms relative to the groove center axis. In other words, X is reduced during cutting to the same degree, or to a lesser degree, than the distance from the groove center axis to the outer wall surface is reduced during cutting. In this way, the dimensional accuracy of at least the outer wall surface of the circular groove is improved.

By providing in the method a rotatable tool having two cutting edges which comprise a first radially outer cutting edge and a second radially inner cutting edge, where the first radially outer cutting edge is located at a larger radial distance from the tool center axis than any other cutting edge of the rotatable tool, and wherein the second radially inner cutting edge is located at a smaller radial distance from the tool center axis than any other cutting edge of the rotatable tool, only the first outer cutting edge cuts or generates the final shape of the outer wall surface of the circular groove, and only the second inner cutting edge cuts or generates the final shape of the inner wall surface of the circular groove. The second radially inner cutting edge is opposite the first radially outer cutting edge, this means that they are spaced apart by substantially 180 degrees, or 175-185 degrees, preferably 180 degrees, around the tool center axis. With such a rotatable tool, the dimensional accuracy of the rotatable tool affects the dimensional tolerances of the circular groove walls to a lesser degree. Such a tool is suitable for machining a variety of circular grooves of different diameters. That the first outer cutting edge is an outer cutting edge means that it has a corresponding rake face located radially inside, i.e. closer to the tool center axis. That the second radially inner cutting edge is an inner cutting edge means that it has a corresponding rake face located radially outside, i.e. further away from the tool center axis. The first radially outer cutting edge has a shape which corresponds to the shape of the outer wall surface of the circular groove formed by the cutting operation. The second radially inner cutting edge has a shape which corresponds to the shape of the inner wall surface of the circular groove formed by the cutting operation. That the first radially outer cutting edge is located at a larger radial distance from the tool center axis than any other cutting edge of the rotatable tool means that in a plane perpendicular to the tool center axis, the point of the radially outer cutting edge located in that plane is located at a larger radial distance from the tool center axis than any other points of cutting edges of the rotatable tool located in that plane. All points first radially outer cutting edge do not necessarily be located at a larger radial distance from the tool center axis than any other cutting edge of the rotatable tool. In a corresponding way, in a plane perpendicular to the tool center axis, the point of the second radially inner cutting edge is located at a smaller radial distance from the tool center axis than any other points of cutting edges of the rotatable tool located in that plane. The tool center axis is a longitudinal axis of the tool, where the cutting edges are located in a front or forward longitudinal direction, and the rear end is located in an opposite rearward longitudinal direction. Preferably the rear end is in the form of a rear coupling part suitable to be coupled in a rotatable machine tool spindle. Preferably, the rear coupling part is conically shaped or tapered, wherein rear coupling part is substantially symmetrically arranged around the tool center axis, such that the rear coupling part has a center axis which is located at the tool center axis. The rotatable tool may also be formed in one monolithic piece of wear resistant material, such as cemented carbide.

According to one embodiment the rotatable tool comprises a first radially inner cutting edge, a first corner cutting edge, a second radially outer cutting edge and a second corner cutting edge, the first radially outer cutting edge and the first radially inner cutting edge converge towards and are connected by the first corner cutting edge, the second radially outer cutting edge and the second radially inner cutting edge converge towards and are connected by the second corner cutting edge, the first radially inner cutting edge and the second radially outer cutting edge are located on opposite sides and at a distance from the tool center axis, the first corner cutting edge and the second corner cutting edge are located on opposite sides and at a distance from the tool center axis, the first corner cutting edge is located at a distance P from the tool center axis, and the second corner cutting edge is located at a distance P' from the tool center axis. By this, there a larger number of cutting edges, and hence a faster metal removal is possible. Further, since the rotatable tool comprise two radially outer and two radially inner cutting edges, a movement of the tool which comprise radial components in opposite directions is possible, such as when the tool center axis rotates around the groove center axis. The corner cutting edges are preferably in the shape of a segment of a circle with a radius of 0.1 - 4 mm, preferably 0.4 - 2.4 mm. By this, the tool is suitable to machine or cut a finished groove which has curved portions connected to the bottom surface, such as e.g. seal ring grooves. By this, the wear will be reduced, compared to if corner cutting edges would be sharp or have smaller curvature.

According to one embodiment the distance P is equal or larger than the distance P'. By having such distances equal, the tool has an improved rotational balancing, or a center of mass located close to or at the tool center axis. By having the distance from the tool center axis to the first corner cutting edge larger than a distance from the tool center axis to the second corner cutting edge, the risk is reduced that the second radially outer cutting edge cuts the final shape of the outer wall surface. This risk is mainly or solely due to the dimensional accuracy or tolerances of the rotating tool. Preferably, the distance P is 0.1-1.0 mm larger than the distance P'. A further improvement is achieved when the distance P is 0.3 - 0.5 mm larger than the distance P'.

According to one embodiment the first radially outer cutting edge forms a first outer edge angle α with the tool center axis, the first radially inner cutting edge forms a first inner edge angle β with the tool center axis, the second radially outer cutting edge forms a second outer edge angle α' with the tool center axis, the second radially inner cutting edge forms a second inner edge angle β' with the tool center axis, the first and second radially outer cutting edges converge away from the rear end, and the first and second radially inner cutting edges converge towards the rear end. Each of the angles α, β, α' and β' are larger than zero degrees and smaller than 90 degrees. Preferably, each of the angles α, β, α' and β' is between 1 and 89 degrees, even more preferably between 5 and 45 degrees. At least the first radially outer cutting edge and the second radially inner cutting edge are preferably straight.

According to one embodiment the first outer edge angle α is larger than the second outer edge angle α', the second inner edge angle β' is larger than the first inner edge angle β, the first outer edge angle α is larger than the first inner edge angle β, and the second outer edge angle α' is smaller than the second inner edge angle β'.

According to one embodiment the rotatable tool comprises a first cutting insert and a second cutting insert, the first cutting insert comprise the first radially outer cutting edge, the first radially inner cutting edge and the first corner cutting edge, the second cutting insert comprise the second radially outer cutting edge, the second radially inner cutting edge and the second corner cutting edge. By this, the part of the rotatable tool that is subjected to wear during cutting is cutting inserts, which can be replaced after use. Also, the cutting inserts can have a design which does not correspond to the shape of the circular groove to be formed. Only the first radially outer cutting edge and the second radially inner cutting edge needs to have shapes which, when the inserts are mounted, corresponds to the shape of the outer and inner wall surface, respectively. Hence, the same inserts can be used for forming circular grooves of a range of diameters and widths. Preferably the cutting inserts are made in a more wear resistant material, e.g. cemented carbide, than the other parts of the rotatable tool.

According to one embodiment the first cutting insert has a parallelogram shape where the first radially outer cutting edge and the first radially inner cutting edge form two adjacent sides of the parallelogram and the first corner cutting edge forms a corner of the parallelogram, the second cutting insert has a parallelogram shape where the second radially outer cutting edge and the second radially inner cutting edge form two adjacent sides of the parallelogram and the second corner cutting edge forms a corner of the parallelogram, in that the first and second cutting inserts are identical, and the first corner cutting edge and second the corner cutting edge are located at longitudinal equidistant positions. By this having identical inserts, the number of insert types can be reduced. Parallelogram shaped inserts, i.e. parallelogram when the rake face is facing the viewer, is a common insert shape in turning. The nose angle is preferably 35 degrees, such as for VBMT inserts. The outer and inner cutting edges of both the first and second cutting inserts are straight; therefore the tool can cut or machine a finished circular groove with straight inner and outer wall surfaces, such as a seal ring groove. By this, each cutting insert can be used two times. By this, the first cutting insert and the second cutting insert can after used be mounted it the opposite insert seat. This can be economical, because the wear pattern of the first and second cutting inserts after cutting will be located on different portions. Therefore, cutting insert consumption may be reduced. By having the first corner cutting edge and second the corner cutting located at longitudinal equidistant positions, it is possible to form a flat bottom surface of the circular groove.

According to one embodiment the rotatable tool comprise radial positioning means such that at least one of the first radially outer cutting edge and second radially inner cutting edge can be positioned on at least two different radial distances from the tool center axis. By this, circular grooves of different widths can be used with the same rotatable tool.

According to one embodiment, the method further comprises the steps of entering the work piece with the corner cutting edges, and when the corner cutting edges enters the work piece setting X= (F+P-P')/2, where F is the width of the opening of the circular groove when the width F is in a plane perpendicular to the groove center axis. In this way, the dimensional accuracy of at least the outer wall surface of the circular groove is improved.

According to one embodiment, the method further comprises the steps of when the corner cutting edges are at the bottom surface of the circular groove, setting X=(C+P-P')/2, where C is the width of the bottom surface of the circular groove, when the width C is in a plane perpendicular to the groove center axis. In this way, the dimensional accuracy of at least the outer wall surface of the circular groove is improved.

According to one embodiment, the method further comprises the step of setting P + P' = 2E, where E is the distance from the groove center axis to a center point of the circular groove. In this way, the dimensional accuracy of at least the outer wall surface of the circular groove is improved.

According to one embodiment, the method further comprises the step of setting P ≤ P' + C/2, where C is the width of the bottom surface of the circular groove, when the width C is in a plane perpendicular to the groove center axis. In this way, the dimensional accuracy of at least the outer wall surface of the circular groove is improved.

According to one embodiment, the method further comprises the steps of setting the first outer edge angle α to be equal to an outer wall angle γ which outer wall angle γ is the angle the outer wall surface forms with the groove center axis, setting the second inner edge angle β' to be equal to the inner wall angle δ which inner wall angle δ is the angle the inner wall surface forms with the groove center axis, setting the sum of the first outer edge angle α and the first inner edge angle β to be smaller than the sum of the outer wall angle γ and the inner wall angle δ, setting the sum of the second outer edge angle α' and the second inner edge angle β' to be smaller than the sum of the outer wall angle γ and the inner wall angle δ, and forming the bottom surface such that the bottom surface is located in a plane perpendicular to the groove center axis. In this way, the dimensional accuracy of at least the outer wall surface of the circular groove is improved.

According to one embodiment, the method further comprises the steps of forming a seal ring groove. A seal ring groove has both outer wall angle and inner wall angle in the range of 22-24 degrees, preferably 23 degrees. Preferably, the seal ring groove further has at least the following dimensional characteristics. F = 5 - 18 mm. H = 3 - 9 mm. C = 1.5- 11 mm. 1.6 < F/C < 2.8. 1.4 < F/H < 2.2. 0.7 < H/C < 2.0. F is the width of the opening of the circular groove, C is the width of the bottom surface of the circular groove, and H is the depth of the circular groove, i.e. the distance from the bottom surface to the opening, in a direction parallel to the groove center axis. The bottom surface is located in a plane which is perpendicular to the groove center axis. Between the bottom surface and both the inner wall surface and the outer wall surface, there are curved portions formed, of a constant radius in the range of 0.4 - 2.4 mm. The seal ring groove is symmetric around a center thereof. The inner wall surface and the outer wall surface are straight and tapered in such a way that the opening of the groove is wider than the bottom surface of the groove.

### BRIEF DESCRIPTION OF THE APPENDED DRAWINGS

Fig 1 is a perspective view of a rotatable tool provided in the method according to the invention.
Fig 2 is a side view of the rotatable tool as in Fig 1.
Fig 3 is a front view of the rotatable tool as in Fig 1.
Fig 4 is perspective exploded view of the rotatable tool as in Figs 1-3, showing the slide and cutting head in detail.
Fig 5 is a side view of the rotatable tool as in Figs 1-4, as well as a work piece in which a circular groove has been formed by metal cutting using the rotatable tool.

### DETAILED DESCRIPTION OF PREFERED EMBODIMENTS OF THE INVENTION

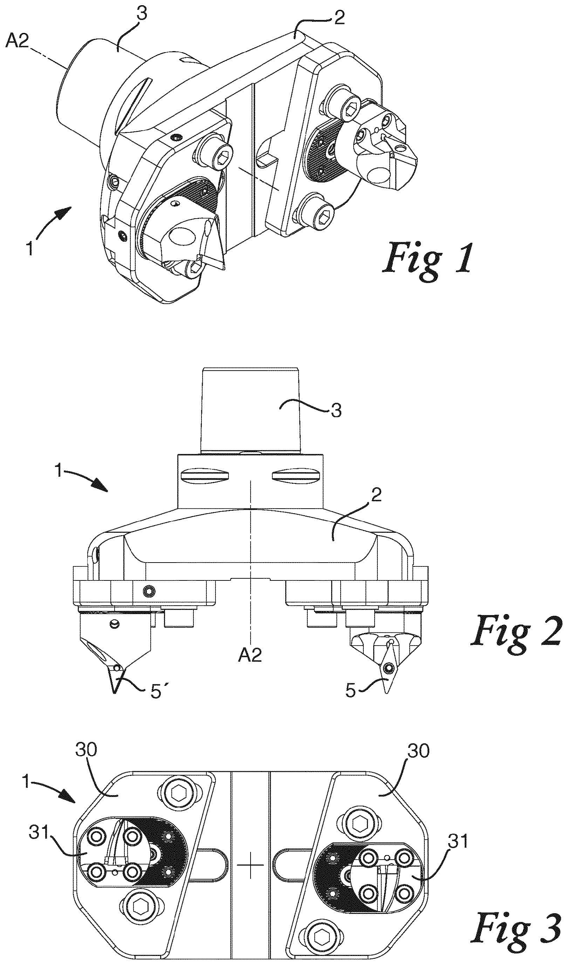

In Figs 1-5, a rotatable tool 1 is shown. It is has a longitudinally rear end in the form of a coupling part 3 suitable to be coupled in a machine tool spindle in a machine, such as a CNC-machine, e.g. a machining center. Alternatively, it is connected to an extension part or extension tool, which is coupled in a machine tool spindle. The coupling part 3 is substantially symmetrical around the tool center axis, which is a longitudinal axis; also the axis around the tool rotates during machining. The coupling part 3 is conical in shape, with a narrow portion at a longitudinal end, and a wider portion closer to a longitudinal front part of the tool. The tool body part 2 is located between the rear coupling part and the longitudinal front part. In the front part, there are formed insert seats, or pockets, in which first and second cutting inserts 5, 5' can be mounted by screws through a center hole in each of the inserts. Alternatively, the inserts can be arranged in the seats by top clamps, which press against a top surface of each of the inserts. The top surface is a rake face, i.e. a surface against which chips during metal cutting are pressed against. Opposite the top surface is a bottom surface, which is in contact with the insert seat. A hole for a screw has openings in the top surface and the bottom surface. The top surface and the bottom surface of each cutting insert 5, 5' are connected by side surfaces, at least one of which during metal cutting is a clearance surfaces. Each cutting insert 5, 5' has cutting edges 6, 6', 7, 7', 8, 8'connecting the top surface and the side surfaces. Each insert has a parallelogram shape in a top view, i.e. with the rake face against the viewer. Opposite acute corners of the parallelogram are 35 degrees, which is within a preferred range of 20 - 45 degrees. Opposite obtuse corners are 145 degrees. At the acute corners of the parallelogram shaped cutting inserts 5, 5' there are formed corner cutting edges 8, 8'. The corner cutting edges 8, 8' are the part of the tool which first cuts chips from the work piece. The corner cutting edges 8, 8' are longitudinal front end points or longitudinal front end portions of the tool, where the tool center axis A2 is a longitudinal axis, and the rear coupling part 3 comprise a longitudinal rear end.

The top surfaces of the first and the second inserts 5, 5' are located in different planes, i.e. not in a common plane. The first and the second cutting inserts 5, 5' are located, i.e. mounted, upside down relative to each other, when the rotatable tool 1 is viewed with the front against the viewer, as can be seen in Fig 3. The first and the second cutting inserts 5, 5' are located on opposite sides of the tool center axis A2. When the tool 1 is rotated 180 degrees around the tool center axis A2, the first cutting insert 5 is at the starting position of the second cutting insert 5', and vice versa.

The rotatable tool 1 is suitable to be rotatable around a tool center axis A2 thereof in one way, or in one rotational direction only. That direction is such that the top surface of each cutting insert 5, 5' is moving in front of the bottom surface of that cutting insert.

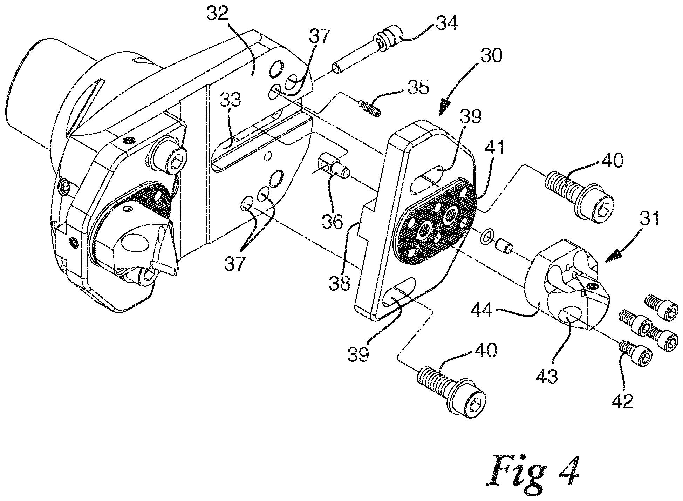

The rotatable tool comprise radial positioning means 30-42 such that at least one of the first radially outer cutting edge 6 and second radially inner cutting edge 7' can be positioned on at least two different radial distances from the tool center axis A2. These radial positioning means are shown in Fig 4, the rotatable tool 1 comprises slides 30 which are attachable to the tool body part 2 by fixation means in the form of screws 40, which can be attached in threaded holes 37 in the tool body part 2, whereby the screws penetrate through holes 39 in the slides. The through holes 39 are elongated in such a way that a screw 40 which penetrate a screw hole 39 can be attached in two separate threaded holes 37. In such way two different radial positions, i.e. radial distances from the tool center axis A2, of the slide 30, are possible. By this, the tool 1 can be used for machining circular grooves of a wider diameter range. Each slide 30 comprise a rear elongated ridge 38, arranged to be located in a corresponding elongated groove 33 in the tool body part 2, and an opposite front attachment surface 41. Each attachment surface 41 is formed to hold a cutting head 31. The cutting head 31 has an insert seat where a cutting insert 5, 5' is or can be clamped, e.g. by means of a screw or a clamp. Adjoining the seat is a curved support 44, which is curved in a way such that there is enough clearance when cutting, while at the same time support the insert 5, 5'. The cutting head 31 further comprise an attachment surface arranged to be mounted, i.e. firmly connected, to the attachment surface 41 of the tool body part 2, by attachment means in the form of screws 42, which penetrate through holes 43 in the cutting head 31. The two cutting heads 31 which are part of the rotatable tool 1 are different in shape. More specifically, the insert seats which are suitable for the cutting inserts 5, 5' are different in such a way that the cutting inserts 5, 5' when mounted have their respective radially outer cutting edges 6, 6' at different angles. The cutting head 31 can be mounted on two different radial positions against the attachment surface 41. By this, the tool 1 can be used for machining circular grooves of a wider diameter range. The slide can be radially adjusted, i.e. set, in a step less manner, i.e. fine adjustment. This functionality is possible by an arrangement, where by turning an adjustment screw 34 which passes through a threaded through hole in a pull-pin 36, the slide 30 moves radially by a force applied from the pull-pin 36. During fine-adjustment, screws 40 shall be in an open position, i.e. in a position such that the slide 30 can move relative to the tool body part 2. After fine-adjustment, the screws 30 are tightened such that the slide 30 is firmly locked or attached to the tool body part 2.

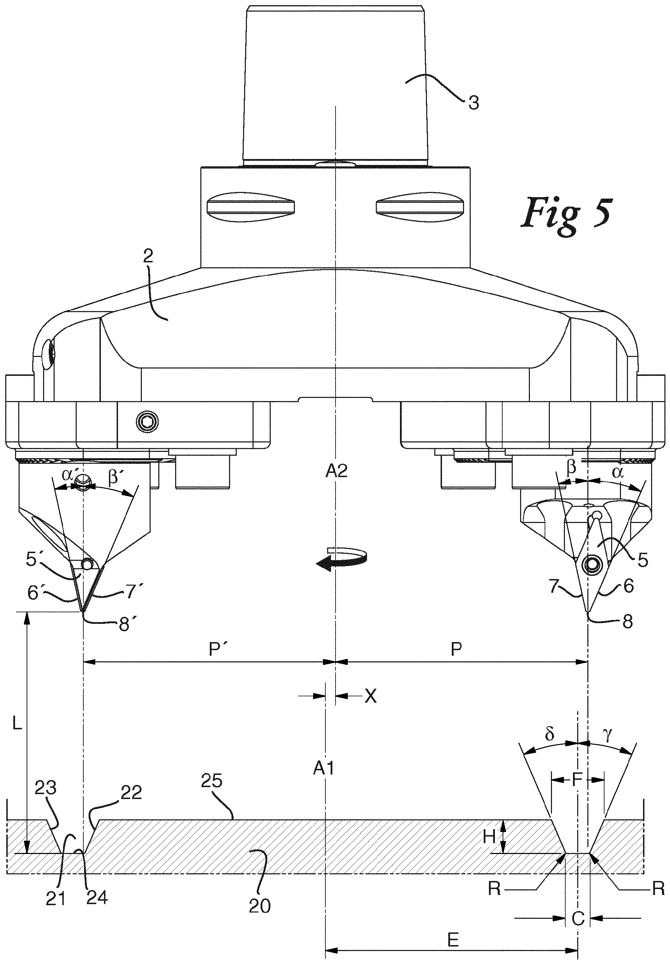

In Fig 5, it is shown that each of the inserts 5, 5', which have a parallelogram shape, are located such that a radially outer cutting edge 6, 6' and radially inner cutting edge 7, 7' extends in a longitudinally forward direction, i.e. towards the metal work piece 20 or away from the rear coupling portion 3, and are connected by a corner cutting edge 8, 8'. Each radially inner cutting edge 7, 7' is located between a radially outer cutting edge 6, 6' of the same insert 5, 5' and the tool center axis A1. The first radially outer cutting edge 6, part of the first cutting insert 5, forms an first outer edge angle α with the tool center axis A2. The first radially inner cutting edge 7, part of the first cutting insert 5, forms a first inner edge angle β with the tool center axis A2. The angles α and β are measured or determined as in Fig 5: the rotating tool 1 is arranged perpendicular to a viewing direction such that the first and second cutting inserts 5, 5' are at a largest distance from each other, when the viewer observes the rotating tool 1. Then, the rotating tool 1 is projected on a plane which comprises the tool center axis A2. Then, the angles α and β are measured or determined. In a corresponding way, the radially outer cutting edge 6' of the second cutting insert 5' forms an second outer edge angle α' with the tool center axis A2, and the inner cutting edge 6' of the second cutting insert 5' forms a second inner edge angle β' with the tool center axis A2. The radially outer cutting edges 6, 6' of the first and second cutting inserts 5, 5' converge away from the rear coupling part 3 at an area or point located at a distance from the tool center axis A2, the area or point being closer to the corner cutting edge 8' of the second cutting insert 5' than the corner cutting edge 8 of the first cutting insert 5. The first outer edge angle α is larger than the second outer edge angle α', and the second inner edge angle β' is larger than the first inner edge angle β. In this way, only one cutting edge, i.e. the radially outer cutting edge 6 of the first cutting insert 5, will generate or cut the final shape of the outer wall surface 23 of the circular groove 21. In a corresponding way, only one cutting edge, i.e. the second radially inner cutting edge 7', part of the second cutting insert 5', will generate or cut the final shape of the inner wall surface 22 of the circular groove 21. By this, any dimensional tolerances or imperfections in the rotating tool 1 including the cutting inserts 5, 5' will be reduced. A further benefit is that the same sets of inserts, e.g. two inserts with 35 degree nose angle, can be used for machining or cutting finishing circular grooves of different outer and inner wall angles δ, γ. The nose angle of the inserts 5, 5' in Figs 1 - 5, i.e. the angle between radially outer 6, 6' and radially inner 7, 7' cutting edges is 35 degrees, a common ISO turning insert designation being VBMT.

In Fig 5, the metal work piece 20 is shown. It show how the circular groove 21 is formed in the work piece after a machining operation, i.e. metal cutting. The circular groove 21 has a groove center axis A1. The circular groove is formed in, and has an opening in, a surface 25 of the work piece 20 which is perpendicular, at least in an area adjacent the circular groove 25, to a groove center axis A1. The circular groove is tapered in such a way that it is widest at the opening and has a most narrow portion thereof at a bottom surface 24. The bottom surface 24 is located perpendicular to the groove center axis A1. The circular groove 21 has a depth H, which is the distance from the bottom surface 24 to the opening, i.e. the surface 25, measured parallel to the groove center axis A1. The circular groove 21 has a width of the opening F, and a width of the bottom surface C, both distances measured perpendicular to the groove center axis. The width of the opening F is larger than the width of the bottom surface C. Preferably, F is within the range 5 - 18 mm. Preferably, H is within the range 3 - 9 mm. Preferably, C is within the range 1,5 - 11 mm. Preferably, 1,6 < F/C < 2,8. Preferably, 1.4 < F/H < 2.2. Preferably, 0.7 < H/C < 2.0. The circular groove 21 has an inner wall surface 22, which forms an inner wall angle δ with the groove center axis A1. The circular groove 21 has an outer wall surface 23, which forms an outer wall angle γ with the groove center axis A1. The inner wall surface 22 is located between the outer wall surface 23 and the groove center axis A1.

When producing or making a finished circular groove by machining or cutting, the rear coupling part 3 of the rotatable tool 1 is clamped in a machine tool spindle. It rotates around the tool center axis A2 thereof, i.e. a first rotation. Preferably, the number of revolutions per minute is above 60. Preferably, the number of revolutions per minute is less than 1000. The tool center axis is set parallel and at a distance X from the groove center axis A1, i.e. a center axis A1 of a circular groove 21 which is to be produced. The tool center axis A2, and hence the rotatable tool 1, is rotated around the groove center axis A1. This second rotation is preferably in an opposite direction to the rotational direction of which the rotating tool 1 rotates around the tool center axis A2 thereof. The benefit of this is a longer tool-life. Preferably this second rotation is of a lower number of revolutions per minute than the number of revolutions per minute of the first rotation. Even more preferably, this second rotation has a number of rotations per minute which is between 1/20 to 1/200 of the value of the first rotation. In other words, when the rotatable tool 1 has rotated between 20 and 200 revolutions around the tool center axis A2 thereof, the tool center axis A2 has rotated 1 revolution around the groove center axis A1. Both rotations are preferably of a constant value at least during the part of the operation in which the cutting inserts 5, 5' are in cut. The rotatable tool 1 has a movement towards the work piece 20 in a longitudinal direction, i.e. a longitudinal feed. This longitudinal feed is preferably at a constant rate. As the corner cutting edges 8, 8' reaches the surface 25 of the work piece 20, the formation of the circular groove 21 starts, i.e. the cutting inserts 5, 5' go into cut, and chips from the work piece 20 are removed. The movement in the longitudinal direction, i.e. the longitudinal feed, stops when at least one of the corner cutting edges 8, 8' reaches the bottom surface 24 of the circular groove 21. From the point where at least one of the corner cutting edges 8, 8' go into cut, i.e. enters the work piece, until at least one of the corner cutting edges 8, 8' reaches the bottom surface 24 of the circular groove 21, the distance X is gradually reduced. With this method, chip thickness is reduced. This gives the possibility of increased cutting data, e.g. cutting speed, which reduces the cutting time. All motions are relative motions between the rotatable tool 1 and the metal work piece 20. Preferably, the metal work piece 20 is still, i.e. does not move, during the machining operation or cutting. Described in a different way, a distance L is a longitudinal distance, i.e. parallel to the groove center axis A1 and the tool center axis A2, from the bottom surface 24 of the circular groove 21 to the corner cutting edges 8, 8', or to the one of the cutting edges 8, 8' which is closest to the bottom surface 24. When L is equal to H, the cutting starts. When L is equal to zero, the cutting stops. Then the rotatable tool 1 is retracted, i.e. moved in a direction away from the bottom surface 24 of the circular groove 21, preferably in a longitudinally rearward direction parallel to the groove center axis A1.

Each cutting insert 5, 5' have a nose angle, i.e. α + β or α' + β', which is smaller than groove angle, i.e. δ + γ. In this way, the same set of inserts can be used for grooves having a wide range of groove angles. Also, the bottom surface 24 of the circular groove 21 has a different shape than the corner cutting edges 8, 8'. Hence, the rotatable tool 1 do not have cutting inserts 5, 5' that have an corresponding shape to the circular groove 21 to be machined or cut.

Preferably the corner cutting edges 8, 8' are longitudinally spaced apart by less than 2 mm, even more preferably by less than 0, 5 mm. They do not have to be longitudinally spaced apart. Preferably the distance P, which is the distance from the tool center axis A2 to the corner cutting edge 8 of the first cutting insert 5, and P', which is the distance from the tool center axis A2 to the corner cutting edge 8' of the second cutting insert 5', are so related that P is greater than or equal to P'. P may be equal to P'. P is preferably less than 1 mm longer than P'.

The radially outer and radially inner cutting edges 6, 6', 7, 7' have a length of preferably 2-30 mm, even more preferably 4 - 12 mm. The rotatable tool 1 has clearance between the cutting inserts 5, 5', in other words, there is no material of the rotatable tool 1 between the radially inner cutting edges 7, 7'.

## Claims

1. A method for forming by metal cutting a circular groove (21) in a metal work piece (20),
the method comprises the steps of
providing a rotatable tool (1) for forming by metal cutting a circular groove (21) in a metal work piece (20), comprising a front end and a rear end (3), in that the rotatable tool (1) is rotatable in a given direction of rotation around a tool center axis (A2) which is a longitudinal axis of the rotatable tool (1), the front end comprises two cutting edges (6, 7') located on opposite sides and at a distance from the tool center axis (A2), in that the two cutting edges comprise a first radially outer cutting edge (6) and a second radially inner cutting edge (7'), in that the first radially outer cutting edge (6) is located at a larger radial distance from the tool center axis (A2) than any other cutting edge of the rotatable tool (1), and in that the second radially inner cutting edge (7') is located at a smaller radial distance from the tool center axis (A2) than any other cutting edge of the rotatable tool (1),
providing a metal work piece (20) comprising a surface (25) which is perpendicular to a groove center axis (A1),
setting the tool center axis (A2) parallel and at a distance X from the groove center axis (A1),
rotating the rotatable tool (1) around the tool center axis (A2),
rotating the tool center axis (A2) around the groove center axis (A1) and moving the rotatable tool (1) in a forward longitudinal direction towards the work piece (20) such that the cutting edges (6, 7') of the rotatable tool (1) enter the metal work piece (20),
**characterised by** comprising the further steps of
gradually decreasing the distance X and simultaneously moving the rotatable tool (1) in a forward longitudinal direction,
thereby forming in the metal work piece (20) a circular groove (21) comprising a bottom surface (24), an inner wall surface (22) formed by the second radially inner cutting edge (7'),
and an outer wall surface (23) formed by the first radially outer cutting edge (6), and an opening in the surface (25) of the work piece (20) which is perpendicular to a groove center axis (A1) of the circular groove (21).

2. The method according to claim 1, wherein the method further comprises the steps of entering the work piece (20) with the corner cutting edges (8, 8'), and when the corner cutting edges (8, 8') enters the work piece (20) setting X=(F+P-P')/2, where F is the width of the opening of the circular groove (21) when the width F is in a plane perpendicular to the groove center axis (A1).

3. The method according to claim 2, wherein the method further comprises the steps of when the corner cutting edges (8, 8') are at the bottom surface (24) of the circular groove (21), setting X=(C+P-P')/2, where C is the width of the bottom surface (24) of the circular groove (21), when the width C is in a plane perpendicular to the groove center axis (A1).

4. The method according to any of the claims 2 or 3, wherein the method further comprises the step of setting P + P' = 2E, where E is the distance from the groove center axis (A1) to a center point of the circular groove (21).

5. The method according to any of the claims 2 to 4, wherein the method further comprises the step of setting P ≤ P' + C/2, where C is the width of the bottom surface (24) of the circular groove (21), when the width C is in a plane perpendicular to the groove center axis (A1).

6. The method according to any of the claims 2 to 4, wherein the method further comprises the steps of
setting the first outer edge angle (α) to be equal to an outer wall angle (γ) which outer wall angle (γ) is the angle the outer wall surface (23) forms with the groove center axis (A1),
setting the second inner edge angle (β') to be equal to the inner wall angle (δ) which inner wall angle (δ) is the angle the inner wall surface (22) forms with the groove center axis (A1),
setting the sum of the first outer edge angle (α) and the first inner edge angle (β) to be smaller than the sum of the outer wall angle (γ) and the inner wall angle (δ),
setting the sum of the second outer edge angle (α') and the second inner edge angle (β') to be smaller than the sum of the outer wall angle (γ) and the inner wall angle (δ),
and forming the bottom surface (24) such that the bottom surface (24) is located in a plane perpendicular to the groove center axis (A1).

7. The method according to claim 6, wherein the method is for forming a seal ring groove.

8. The method according to any of the claims 1 to 7, wherein the rotatable tool (1) comprises a first radially inner cutting edge (7), a first corner cutting edge (8), a second radially outer cutting edge (6') and a second corner cutting edge (8'), wherein the first radially outer cutting edge (6) and the first radially inner cutting edge (7) converge towards and are connected by the first corner cutting edge (8), wherein the second radially outer cutting edge (6') and the second radially inner cutting edge (7') converge towards and are connected by the second corner cutting edge (8'), wherein the a first radially inner cutting edge (7) and the second radially outer cutting edge (6') are located on opposite sides and at a distance from the tool center axis (A2), wherein the first corner cutting edge (8) and the second corner cutting edge (8') are located on opposite sides and at a distance from the tool center axis (A2), wherein the first corner cutting edge (8) is located at a distance P from the tool center axis (A2), and wherein the second corner cutting edge (8') is located at a distance P' from the tool center axis (A2).

9. The method according to claim 8, wherein the distance P is equal or larger than the distance P'.

10. The method according to claim 8 or 9, wherein the first radially outer cutting edge (6) forms a first outer edge angle (α) with the tool center axis (A2), wherein the first radially inner cutting edge (7) forms a first inner edge angle (β) with the tool center axis (A2), wherein the second radially outer cutting edge (6') forms a second outer edge angle (α') with the tool center axis (A2), wherein the second radially inner cutting edge (7') forms a second inner edge angle (β') with the tool center axis (A2), wherein the first and second radially outer cutting edges (6, 6') converge away from the rear end (3), and wherein the first and second radially inner cutting edges (7, 7') converge towards the rear end (3).

11. The method according to claim 10, wherein the first outer edge angle (α) is larger than the second outer edge angle (α'), wherein second inner edge angle (β') is larger than the first inner edge angle (β), wherein the first outer edge angle (α) is larger than the first inner edge angle (β), and wherein the second outer edge angle (α') is smaller than the second inner edge angle (β').

12. The method according to any of the claims 8 to 11, wherein the rotatable tool (1) comprise a first cutting insert (5) and a second cutting insert (5'), wherein the first cutting insert (5) comprise the first radially outer cutting edge (6), the first radially inner cutting edge (7) and the first corner cutting edge (8), and wherein the second cutting insert (5') comprise the second radially outer cutting edge (6'), the second radially inner cutting edge (7') and the second corner cutting edge (8').

13. The method according to claim 12, wherein the first cutting insert (5) has a parallelogram shape where the first radially outer cutting edge (6) and the first radially inner cutting edge (7) form two adjacent sides of the parallelogram and the first corner cutting edge (8) forms a corner of the parallelogram, wherein the second cutting insert (5') has a parallelogram shape where the second radially outer cutting edge (6') and the second radially inner cutting edge (7') form two adjacent sides of the parallelogram and the second corner cutting edge (8') forms a corner of the parallelogram, wherein the first and second cutting inserts (5, 5') are identical, and wherein the first corner cutting edge (8) and second the corner cutting edge (8') are located at longitudinal equidistant positions.

14. The method according to any of the claims 1 to 13, wherein the rotatable tool (1) comprise radial positioning means (30-42) such that at least one of the first radially outer cutting edge (6) and second radially inner cutting edge (7') can be positioned on at least two different radial distances from the tool center axis (A2).

## Patentansprüche

1. Verfahren zum Ausbilden einer kreisförmigen Nut (21) in einem Metallwerkstück (20) mittels Metallschneiden, wobei das Verfahren die Schritte aufweist:
Bereitstellen eines drehbaren Werkzeuges (1) um mittels Metallschneiden eine kreisförmigen Nut (21) in einem Metallwerkstück (20) auszubilden, mit einem vorderen Ende und einem hinteren Ende (3), wobei das drehbare Werkzeug (1) in einer vorbestimmten Richtung um eine zentrale Werkzeugachse (A2) drehbar ist, welche eine Längsachse des drehbaren Werkzeuges (1) ist, das vordere Ende zwei Schneidkanten (6, 7') aufweist, die an gegenüberliegenden Seiten und in einem Abstand von der zentralen Werkzeugachse (A2) liegen, wobei die zwei Schneidkanten eine erste radial äußere Schneidkante (6) und eine zweite radial innere Schneidkante (7') aufweisen, wobei die erste radial äußere Schneidkante (6) in einem radial größerem Abstand zu der zentralen Werkzeugachse (A2) liegt als jede andere Schneidkante des drehbaren Werkzeuges (1), und wobei die zweite radial innere Schneidkante (7') in einem kleineren Abstand zu der zentralen Werkzeugachse (A2) liegt als jede andere Schneidkante des drehbaren Werkzeuges (1),
Bereitstellen eines Metallwerkstücks (20), welches eine Oberfläche (25) aufweist, die senkrecht zu einer zentralen Achse der Nut (A1) verläuft,
Einstellen der zentralen Werkzeugachse (A2) parallel zu und in einem Abstand X zu der zentralen Achse der Nut (A1),
Drehen des drehbaren Werkzeuges (1) um die zentrale Werkzeugachse (A2), Drehen der zentralen Werkzeugachse (A2) um die zentrale Achse der Nut (A1), und
Vorwärtsbewegen des drehbaren Werkzeuges (1) in Längsrichtung hin zu dem Werkstück (20), wobei die Schneidkanten (6, 7') des drehbaren Werkzeuges (1) in das Metallwerkstück (20) eindringen,
**dadurch gekennzeichnet, dass** das Verfahren die nachfolgenden weiteren Schritte aufweist:
allmähliches Vermindern des Abstandes X und gleichzeitiges Bewegen des drehbaren Werkzeuges (1) in Längsrichtung nach vorn,
dabei Ausbilden einer kreisförmigen Nut (21) in dem Metallwerkstück (20) mit einer Grundfläche (24), wobei eine Innenwandfläche (22) durch die zweite radial innere Schneidkante (7') ausgebildet wird,
und wobei eine Außenwandfläche (23) durch die erste radial äußere Schneidkante (6) ausgebildet wird, und mit einer Öffnung in der Oberfläche (25) des Metallwerkstücks (20), welche senkrecht zu der zentralen Achse (A1) der kreisförmigen Nut (21) ist.

2. Verfahren nach Anspruch 1, wobei das Verfahren weiterhin die Schritte aufweist, dass mit den Eckenschneidkanten (8, 8') in das Werkstück (20) eingedrungen wird, und wobei, wenn die Eckenschneidkanten (8, 8') in das Werkstück (20) eindringen, X = (F+P-P')/2 eingestellt wird, wobei F die Breite der Öffnung der kreisförmigen Nut (21) ist, wenn die Breite F in einer Ebene senkrecht zu der zentralen Achse der Nut (A1) liegt.

3. Verfahren nach Anspruch 2, wobei das Verfahren weiterhin die Schritte aufweist, dass, wenn die Eckenschneidkanten (8, 8') an der Grundfläche (24) der kreisförmigen Nut (21) sind, X = (C+P-P')/2 eingestellt wird, wobei C die Breite der Grundfläche (24) der kreisförmigen Nut (21) ist, wenn die Breite C in einer Ebene senkrecht zu der zentralen Achse der Nut (A1) liegt.

4. Verfahren nach einem der Ansprüche 2 oder 3, wobei das Verfahren weiterhin den Schritt aufweist, dass P+P' = 2E eingestellt wird, wobei E der Abstand von der zentralen Achse der Nut (A1) zu einem Mittelpunkt der kreisförmigen Nut (21) ist.

5. Verfahren nach einem der Ansprüche 2 bis 4, wobei das Verfahren weiterhin den Schritt aufweist, dass P ≤ P'+C/2 eingestellt wird, wobei C die Breite der Grundfläche (24) der kreisförmigen Nut (21) ist, wenn die Breite C in einer Ebene senkrecht zu der zentralen Achse der Nut (A1) liegt.

6. Verfahren nach einem der Ansprüche 2 bis 4, wobei das Verfahren weiterhin die Schritte aufweist:
Einstellen des ersten äußeren Kantenwinkels (α) so, dass dieser gleich einem äußeren Wandwinkel (γ) ist, wobei der äußere Wandwinkel (γ) der Winkel ist, welchen die äußere Wandfläche (23) mit der zentralen Achse der Nut (A1) bildet,
Einstellen des zweiten inneren Kantenwinkels (β') so, dass dieser gleich einem inneren Wandwinkel (δ) ist, wobei der innere Wandwinkel (δ) der Winkel ist, welchen die innere Wandfläche (22) mit der zentralen Achse der Nut (A1) bildet, Einstellen der Summe des ersten äußeren Kantenwinkels (α) und des ersten inneren Kantenwinkels (β) so, dass diese kleiner ist als die Summe des äußeren Wandwinkels (γ) und des inneren Wandwinkels (δ),
Einstellen der Summe des zweiten äußeren Kantenwinkels (α') und des zweiten inneren Kantenwinkels (β') so, dass diese kleiner ist als die Summe des äußeren Wandwinkels (γ) und des inneren Wandwinkels (δ),
und Ausbilden der Grundfläche (24) so, dass die Grundfläche (24) in einer Ebene senkrecht zu der zentralen Achse der Nut (A1) liegt.

7. Verfahren nach Anspruch 6, wobei das Verfahren zum Ausbilden einer Dichtringnut vorgesehen ist.

8. Verfahren nach einem der Ansprüche 1 bis 7, wobei das drehbare Werkzeug (1) eine erste radial innere Schneidkante (7), eine erste Eckenschneidkante (8), eine zweite radial äußere Schneidkante (6') und eine zweite Eckenschneidkante (8') aufweist, wobei die erste radial äußere Schneidkante (6) und die erste radial innere Schneidkante (7) in Richtung auf die erste Eckenschneidkante (8) konvergieren und durch die erste Eckenschneidkante (8) verbunden sind, wobei die zweite radial äußere Schneidkante(6') und die zweite radial innere Schneidkante (7') in Richtung auf die zweite Eckenschneidkante (8') konvergieren und durch die zweite Eckenschneidkante (8') verbunden sind, wobei die erste radial innere Schneidkante (7) und die zweite radial äußere Schneidkante (6') an gegenüberliegenden Seiten und in einem Abstand von der zentralen Werkzeugachse (A2) liegen, wobei die erste Eckenschneidkante (8) und die zweite Eckenschneidkante (8') an gegenüberliegenden Seiten und in einem Abstand von der zentralen Werkzeugsachse (A2) liegen, wobei die erste Eckenschneidkante (8) in einem Abstand P von der zentralen Werkzeugachse (A2) liegt und wobei die zweite Eckenschneidkante (8') in einem Abstand P' von der zentralen Werkzeugachse (A2) liegt.

9. Verfahren nach Anspruch 8, wobei der Abstand P gleich oder größer als der Abstand P' ist.

10. Verfahren nach Anspruch 8 oder 9, wobei die erste radial äußere Schneidkante (6) einen ersten äußeren Kantenwinkel (α) mit der zentralen Werkzeugachse (A2) bildet, wobei die erste radial innere Schneidkante (7) einen ersten inneren Kantenwinkel (β) mit der zentralen Werkzeugachse (A2) bildet, wobei die zweite radial äußere Schneidkante (6') einen zweiten äußeren Kantenwinkel (α') mit der zentralen Werkzeugachse (A2) bildet, wobei die zweite radial innere Schneidkante (7') einen zweiten inneren Kantenwinkel (β') mit der zentralen Werkzeugachse (A2) bildet, wobei die erste und die zweite radial äußere Eckenschneidkante (6, 6') weg von dem hinteren Ende (3) konvergieren, und wobei die erste und die zweite radial innere Eckenschneidkante (7, 7') zu dem hinteren Ende (3) hin konvergieren.

11. Verfahren nach Anspruch 10, wobei der erste äußere Kantenwinkel (α) größer ist als der zweite äußere Kantenwinkel (α'), wobei der zweite innere Kantenwinkel (β') größer ist als der erste innere Kantenwinkel (β), wobei der erste äußere Kantenwinkel (α) größer ist als der erste innere Kantenwinkel (β), und wobei der zweite äußere Kantenwinkel (α') kleiner ist als der zweite innere Kantenwinkel (β').

12. Verfahren nach einem der Ansprüche 8 bis 11, wobei das drehbare Werkzeug (1) einen ersten Schneideinsatz (5) und einen zweiten Schneideinsatz (5') aufweist, wobei der erste Schneideinsatz (5) die erste radial äußere Schneidkante (6), die erste radial innere Schneidkante (7) und die erste Eckenschneidkante (8) aufweist, und wobei der zweite Schneideinsatz (5') die zweite radial äußere Schneidkante (6'), die zweite radial innere Schneidkante (7') und die zweite Eckenschneidkante (8') aufweist.

13. Verfahren nach Anspruch 12, wobei der erste Schneideinsatz (5) die Form eines Parallelogramms hat, bei welchem die erste radial äußere Schneidkante (6) und die erste radial innere Schneidkante (7) zwei benachbarte Seiten des Parallelogramms bilden und die erste Eckenschneidkante (8) eine Ecke des Parallelogramms bildet, wobei der zweite Schneideinsatz (5') die Form eines Parallelogramms hat, bei welchem die zweite radial äußere Schneidkante (6') und die zweite radial innere Schneidkante (7') zwei benachbarte Seiten des Parallelogramms bilden und die zweite Eckenschneidkante (8') eine Ecke des Parallelogramms bildet, wobei der erste und zweite Schneideinsatz (5, 5') gleich sind, und wobei die erste Eckenschneidkante (8) und die zweite Eckenschneidkante (8') in Längsrichtung an gleich beabstandeten Positionen liegen.

14. Verfahren nach einem der Ansprüche 1 bis 13, wobei das drehbare Werkzeug (1) radiale Positionierungsmittel (30-42) aufweist so, dass zumindest entweder die erste radial äußere Schneidkante (6) oder die zweite radial innere Schneidkante (7') in zumindest zwei verschiedenen radialen Abständen von der zentralen Werkzeugachse (A2) positioniert werden kann.

## Revendications

1. Méthode de formation par découpe de métal d'une rainure circulaire (21) dans une pièce d'ouvrage métallique (20),
la méthode comprenant les étapes consistant à
fournir un outil rotatif (1) destiné à former par découpe de métal une rainure circulaire (21) dans une pièce d'ouvrage métallique (20), comprenant une extrémité avant et une extrémité arrière (3), où l'outil rotatif (1) peut être entraîné en rotation selon un sens de rotation donné autour d'un axe central d'outil (A2) lequel est un axe longitudinal de l'outil rotatif (1), l'extrémité avant comprend deux arêtes de coupe (6, 7') situées sur des côtés opposés et à une certaine distance de l'axe central d'outil (A2), où les deux arêtes de coupe comprennent une première arête de coupe radialement extérieure (6) et une deuxième arête de coupe radialement intérieure (7'), où la première arête de coupe radialement extérieure (6) est située à une plus grande distance radiale de l'axe central d'outil (A2) que toute autre arête de coupe de l'outil rotatif (1), où la deuxième arête de coupe radialement intérieure (7') est située à une plus petite distance radiale de l'axe central d'outil (A2) que toute autre arête de coupe de l'outil rotatif (1),
fournir une pièce d'ouvrage métallique (20) comprenant une surface (25) laquelle est perpendiculaire à un axe central de rainure (A1),
placer l'axe central d'outil (A2) de manière parallèle à l'axe central de rainure (A1) et à une distance X de celui-ci,
entraîner en rotation l'outil rotatif (1) autour de l'axe central d'outil (A2),
entraîner en rotation l'axe central d'outil (A2) autour de l'axe central de rainure (A1), et
déplacer l'outil rotatif (1) suivant une direction longitudinale vers l'avant en direction de la pièce d'ouvrage métallique (20) de telle sorte que les arêtes de coupe (6, 7') de l'outil rotatif (1) pénètrent dans la pièce d'ouvrage métallique (20),
**caractérisée par** le fait de comprendre les étapes consistant à
diminuer progressivement la distance X et déplacer simultanément l'outil rotatif (1) suivant une direction longitudinale vers l'avant,
former ainsi dans la pièce d'ouvrage métallique (20) une rainure circulaire (21) comprenant une surface inférieure (24), une surface de paroi intérieure (22) formée par la deuxième arête de coupe radialement intérieure (7'), et une surface de paroi extérieure (23) formée par la première arête de coupe radialement extérieure (6), et une ouverture dans la surface (25) de la pièce d'ouvrage métallique (20) laquelle est perpendiculaire à un axe central de rainure (A1) de la rainure circulaire (21).

2. Méthode selon la revendication 1, où la méthode comprend en outre les étapes consistant à faire pénétrer dans la pièce d'ouvrage métallique (20) les arêtes de coupe de bec (8, 8'), et lorsque les arêtes de coupe de bec (8, 8') pénètrent dans la pièce d'ouvrage métallique (20), paramétrer X = (F + P - P')/2, où F est la largeur de l'ouverture de la rainure circulaire (21) lorsque la largeur F se trouve dans un plan perpendiculaire à l'axe central de rainure (A1).

3. Méthode selon la revendication 2, où la méthode comprend en outre l'étape consistant à, lorsque les arêtes de coupe de bec (8, 8') sont au niveau de la surface inférieure (24) de la rainure circulaire (21), paramétrer X = (C + P - P')/2, où C est la largeur de la surface inférieure (24) de la rainure circulaire (21), lorsque la largeur C se trouve dans un plan perpendiculaire à l'axe central de rainure (A1).

4. Méthode selon l'une quelconque des revendications 2 et 3, où la méthode comprend en outre l'étape consistant à paramétrer P + P' = 2E, où E est la distance entre l'axe central de rainure (A1) et un point central de la rainure circulaire (21).

5. Méthode selon l'une quelconque des revendications 2 à 4, où la méthode comprend en outre l'étape consistant à paramétrer P ≤ P' + C/2, où C est la largeur de la surface inférieure (24) de la rainure circulaire (21), lorsque la largeur C se trouve dans un plan perpendiculaire à l'axe central de rainure (A1).

6. Méthode selon l'une quelconque des revendications 2 à 4, où la méthode comprend en outre les étapes consistant à
paramétrer l'angle de première arête extérieure (α) de sorte à ce qu'il soit égal à l'angle de paroi extérieure (γ) lequel angle de paroi extérieure (γ) est l'angle que la surface de paroi extérieure (23) forme avec l'axe central de rainure (A1),
paramétrer l'angle de deuxième arête intérieure (β') de sorte à ce qu'il soit égal à l'angle de paroi intérieure (δ) lequel angle de paroi intérieure (δ) est l'angle que la surface de paroi intérieure (22) forme avec l'axe central de rainure (A1),
paramétrer la somme de l'angle de première arête extérieure (α) et de l'angle de première arête intérieure (β) de sorte à ce qu'elle soit inférieure à la somme de l'angle de paroi extérieure (γ) et de l'angle de paroi intérieure (δ),
paramétrer la somme de l'angle de deuxième arête extérieure (α') et de l'angle de deuxième arête intérieure (β') de sorte à ce qu'elle soit inférieure à la somme de l'angle de paroi extérieure (γ) et de l'angle de paroi intérieure (δ),
et former la surface inférieure (24) de telle sorte que la surface inférieure (24) est située dans un plan perpendiculaire à l'axe central de rainure (A1).

7. Méthode selon la revendication 6, où la méthode est destinée à former une rainure pour bague d'étanchéité.

8. Méthode selon l'une quelconque des revendications 1 à 7, où l'outil rotatif (1) comprend une première arête de coupe radialement intérieure (7), une première arête de coupe de bec (8), une deuxième arête de coupe radialement extérieure (6') et une deuxième arête de coupe de bec (8'), où la première arête de coupe radialement extérieure (6) et la première arête de coupe radialement intérieure (7) convergent en direction de la première arête de coupe de bec (8) et sont réunies par celle-ci, où la deuxième arête de coupe radialement extérieure (6') et la deuxième arête de coupe radialement intérieure (7') convergent en direction de la deuxième arête de coupe de bec (8') et sont réunies par celle-ci, où la première arête de coupe radialement intérieure (7) et la deuxième arête de coupe radialement extérieure (6') sont situées sur des côtés opposés et à une certaine distance de l'axe central d'outil (A2), où la première arête de coupe de bec (8) et la deuxième arête de coupe de bec (8') sont situées sur des côtés opposés et à une certaine distance de l'axe central d'outil (A2), où la première arête de coupe de bec (8) est située à une distance P de l'axe central d'outil (A2), et où la deuxième arête de coupe de bec (8') est située à une distance P' de l'axe central d'outil (A2).

9. Méthode selon la revendication 8, où la distance P est supérieure ou égale à la distance P'.

10. Méthode selon la revendication 8 ou 9, où la première arête de coupe radialement extérieure (6) forme un angle de première arête extérieure (α) avec l'axe central d'outil (A2), où la première arête de coupe radialement intérieure (7) forme un angle de première arête intérieure (β) avec l'axe central d'outil (A2), où la deuxième arête de coupe radialement extérieure (6') forme un angle de deuxième arête extérieure (α') avec l'axe central d'outil (A2), où la deuxième arête de coupe radialement intérieure (7') forme un angle de deuxième arête intérieure (β') avec l'axe central d'outil (A2), où les première et deuxième arêtes de coupe radialement extérieures (6, 6') convergent dans le sens opposé à l'extrémité arrière (3), et où les première et deuxième arêtes de coupe radialement intérieures (7, 7') convergent en direction de l'extrémité arrière (3).

11. Méthode selon la revendication 10, où l'angle de première arête extérieure (α) est plus grand que l'angle de deuxième arête extérieure (α'), où l'angle de deuxième arête intérieure (β') est plus grand que l'angle de première arête intérieure (β), où l'angle de première arête extérieure (α) est plus grand que l'angle de première arête intérieure (β), et où l'angle de deuxième arête extérieure (α') est plus petit que l'angle de deuxième arête intérieure (β').

12. Méthode selon l'une quelconque des revendications 8 à 11, où l'outil rotatif (1) comprend une première plaquette de coupe (5) et une deuxième plaquette de coupe (5'), où la première plaquette de coupe (5) comprend la première arête de coupe radialement extérieure (6), la première arête de coupe radialement intérieure (7) et la première arête de coupe de bec (8), et où la deuxième plaquette de coupe (5') comprend la deuxième arête de coupe radialement extérieure (6'), la deuxième arête de coupe radialement intérieure (7') et la deuxième arête de coupe de bec (8').

13. Méthode selon la revendication 12, où la première plaquette de coupe (5) présente une forme de parallélogramme où la première arête de coupe radialement extérieure (6) et la première arête de coupe radialement intérieure (7) forment deux côtés adjacents du parallélogramme et la première arête de coupe de bec (8) forme un coin du parallélogramme, où la deuxième plaquette de coupe (5') présente une forme de parallélogramme où la deuxième arête de coupe radialement extérieure (6') et la deuxième arête de coupe radialement intérieure (7') forment deux côtés adjacents du parallélogramme et la deuxième arête de coupe de bec (8') forme un coin du parallélogramme, où les première et deuxième plaquettes de coupe (5, 5') sont identiques, et où la première arête de coupe de bec (8) et la deuxième arête de coupe de bec (8') sont situées à des positions longitudinalement équidistantes.

14. Méthode selon l'une quelconque des revendications 1 à 13, où l'outil rotatif (1) comprend des moyens de positionnement radial (30-42) de telle sorte qu'au moins une arête parmi la première arête de coupe radialement extérieure (6) et la deuxième arête de coupe radialement intérieure (7') peut être positionnée à au moins deux distances radiales différentes de l'axe central d'outil (A2).
